Europäisches Patentamt

(19) European Patent Office

Office européen des brevets

(11) Publication number: **0 063 804**
A2

# (12) EUROPEAN PATENT APPLICATION

(21) Application number: **82103465.9**

(22) Date of filing: **23.04.82**

(51) Int. Cl.³: **H 01 M 8/00, C 25 B 11/02**

(30) Priority: **24.04.81 JP 61315/81**

(43) Date of publication of application: **03.11.82**
Bulletin 82/44

(84) Designated Contracting States: **DE GB NL**

(71) Applicant: **Hitachi, Ltd., 5-1, Marunouchi 1-chome, Chiyoda-ku Tokyo 100 (JP)**

(72) Inventor: **Horiba, Tatsuo, 17-2-402, Moriyamacho-3-chome, Hitachi-shi (JP)**
Inventor: **Iwamoto, Kazuo, 32-7, Kujicho-5-chome, Hitachi-shi (JP)**
Inventor: **Kawana, Hidejiro, 1047-92- Moriyamacho, Hitachi-shi (JP)**
Inventor: **Tamura, Kohki, 17-3, Kujicho-6-chome, Hitachi-shi (JP)**

(74) Representative: **von Füner, Alexander, Dr. et al, Patentanwälte Schiff, von Füner Strehl, Schübel-Hopf, Ebbinghaus, Finck Mariahilfplatz 2 u. 3, D-8000 München 90 (DE)**

(54) **Liquid fuel cell.**

(57) A liquid fuel cell having good cell characteristics, particularly a good current density-voltage characteristic, comprising an anode of electroconductive porous material supporting an electrode catalyst to which a liquid fuel is supplied, a cathode of electroconductive porous material supporting an electrode catalyst to which an oxidizing agent is supplied, an electrolyte existing between the said two electrodes, and a barrier containing the electrolyte and preventing the liquid fuel from transfer to the cathode side, characterized in that the anode has a three-dimensional, reticular structure allowing a gas generated by cell reaction within the anode to ascend and get released from the anode, and having a pore size for retaining a mixture of the liquid fuel and the electrolyte within the anode and a thickness for supporting a necessary amount of the electrode catalyst for the cell reaction.

## LIQUID FUEL CELL

BACKGROUND OT THE INVENTION

(1) FIELD OF THE INVENTION

This invention relates to the so-called liquid fuel cell using a liquid fuel.

(2) DESCRIPTION OF THE PRIOR ART

Heretofore, many researches and studies have been made to improve cell characteristics, particularly current density-voltage characteristic, of a liquid fuel cell. For example, sintered metal plates of nickel, silver, tantalum, etc. or porous carbon plate, carbon felt, or porous material prepared by bonding powders by a binder, or the like have been proposed. For example, Japanese Patent Publication No. 27381/64 discloses a porous electrode of carbon and Japanese Patent Publication No. 19912/61 discloses an electrode of sintered nickel plate. However, these electrodes have not had satisfactory performances, as will be described later.

SUMMARY OF THE INVENTION

An object of the present invention is to provide a liquid fuel cell having an excellent current density-voltage characteristic, which will be hereinafter referred to as "I-V characteristic".

Another object of the present invention is to provide a liquid fuel cell having a high mechanical strength.

Other objects of the present invention will be apparent from the disclosure which follows.

The present invention provides a liquid fuel cell comprising an anode of electroconductive porous material supporting an electrode catalyst to which a liquid fuel is supplied, a cathode of electroconductive porous material supporting an electrode catalyst, to which an oxidizing agent is supplied, an electrolyte existing between the said two electrodes, and a barrier containing the electrolyte and preventing the liquid fuel from transfer to the cathode side, characterized in that the anode has a three-dimensional, reticular structure allowing a gas generated by cell reaction within the anode to ascend and get released from the anode, and having a pore size for retaining a mixture of the liquid fuel and the electrolyte within the anode and a thickness for suppolrting a necessary amount of the electrode catalyst for the cell reaction.

The present inventors have made extensive studies of porous structure of an electrode, which have been so far substantially not made, and have found, as a result, that the I-V characteristic can be improved by using an electroconductive porous material of three-dimensional, reticular structure. At the inside of the conventional porous electrode, that is, a porous electrode with no three-dimensional, reticular structure, prepared by bonding or sintering carbon particles, no substantial cell reaction takes place, even though the electrode catalyst is supported on the electrode, and the cell reaction takes place only on the surface or in the surface layer of the electrode. The present inventors have found that in the case of a porous material having a three-dimensional, reticular structure, supply of a liquid fuel and discharge of reaction product gas such as carbon dioxide, etc. as formed during the reaction can be rapidly carried out to improve the power-generating characteristics.

BRIEF DESCRIPTION OF THE DRAWINGS

Figs. 1(A) and 1(B) are microscopic pictures of cross-sections of electroconductive porous materials for use in a liquid fuel cell as an electrode according to embodiments of the present invention.

Fig. 2 is a cross-sectional schematic view showing a structure of a liquid fuel cell according to one embodiment of the present invention.

Fig. 3 is a diagram showing relations between current density ($mA/cm^2$) and cell voltage (V) (I-V characteristic) of the liquid fuel cell according to Fig. 2.

Fig. 4 is a cross-sectional schematic showing a structure of a liquid fuel cell according to another embodiment of the present invention.

DESCRIPTION OF THE PREFERRED EMBODIMENTS

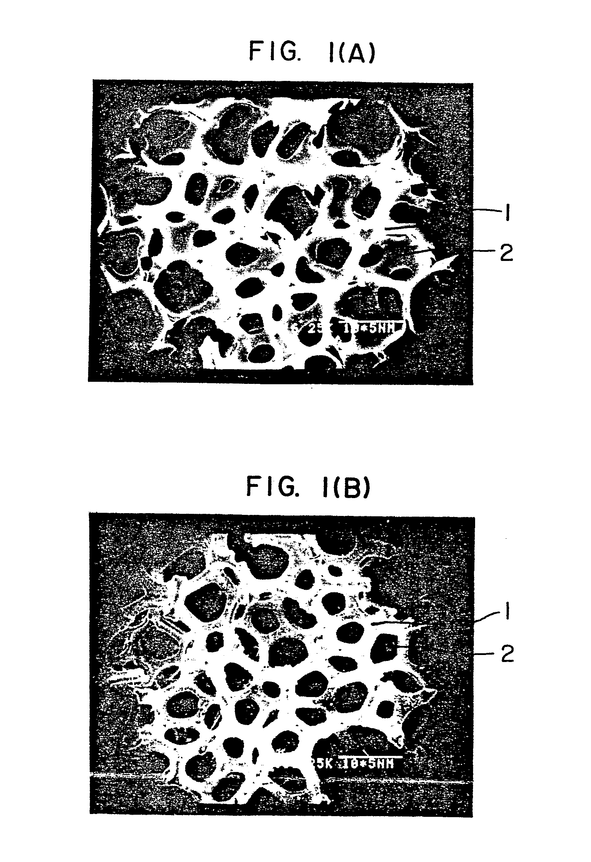

The three-dimentional, reticular structure of an electroconductive porous material according to the present invention is actually those shown in Figs. 1(A) and 1(B). Fig. 1(A) is a microscopic picture of the cross-section of an electroconductive porous carbon material having a three-dimensional, reticular structure, and Fig. 1(B) is a microscopic picture of the one made from nickel, each having a magnification of 15, where numeral 1 shows skeleton parts of the three-dimensional, reticular structure, and numeral 2 pore parts. It is the feature of the present invention that most or all of the pore parts 2 are connected to one another three-dimensionally.

In the case of the conventional, sintered porous electrode, the entire pore parts are not connected to one another three-dimensionally. The skeleton parts 1 of the present porous material are linearly or planarly continued electroconductive material, and are not dot-wise connected electroconductive particles obtained by sintering the particles, such as a sintered mass of the particles.

The three-dimensional, reticular structure has the following advantages:

(1)    Since the pore parts are entirely connected to one another three-dimensionally, discharge of the reaction product gas can be rapidly carried out, and also supply of a liquid fuel into the electrode can be sufficiently rapidly carried out, so that the available reactive surface area can be enlarged, and the cell reaction can be more actively carried out. Consequently, the I-V characteristic can be improved.

(2)    Quite different from bonded particles such as a sintered mass of particles, the three-dimensional, recticular structure itself has a low resistance, and consequently a resistance loss is small.

(3)    Even if a porosity is higher, for example, 85% or higher, the linearly or planarly continued skeleton can assure the mechanical strength required for the electrode. At an equal porosity, the present electrode has a higher mechanical strength than the conventional sintered electrode.

The term "electroconductive porous material" used herein means an electrically connected material enough to allow free migration of electrons therethrough, which is also loose enough to allow free migration and diffusion of molecules and ions of a gas or a liquid. A material species that cannot be attacked physically or chemically by an electrolyte is used for the present electrode. The applicable electrolyte species depends upon the species of a fuel to be used and other conditions, but usually includes an acidic electrolyte such as sulfuric acid, phosphoric acid, etc., and an alkaline electrolyte such as potassium hydroxide, sodium hydroxide, etc., and thus a stable material species against such electrolytes is preferable for the electrode. Usually, porous metal such as nickel, silver, etc., or porous carbon material is suitable material species. Particularly useful is a porous carbon material having a three-dimensional, reticular structure.

An example of a method for preparing the electroconductive porous material will be described below.

In the case of a metallic porous material, a foamed synthetic resin having the so-called continued foams, in which foams are connected to one another, for example, foamed polyurethane, is chemically plated to form a metallic film on the entire wall surfaces of foams in the foamed synthetic resin, and then the foamed synthetic resin is removed by heat decomposition or by burning, or by dissolution with a solvent to obtain a metallic porous material.

In the case of a porous carbon material, a thermo-setting resin, for example, phenol resin, is filled in pore parts of a foamed thermoplastic resin having mutually connected foams, and cured, and then only the foamed thermo-plastic resin is removed by melting by heating, etc., and then the remaining thermo-setting resin is fired for carbonization. For preparation of any of these porous material, the well known method can be used (for example, US Patent No. 4067956 for preparation of porous carbon material). Adjustment of pore size can be made by changing foam size of foamed synthetic resin.

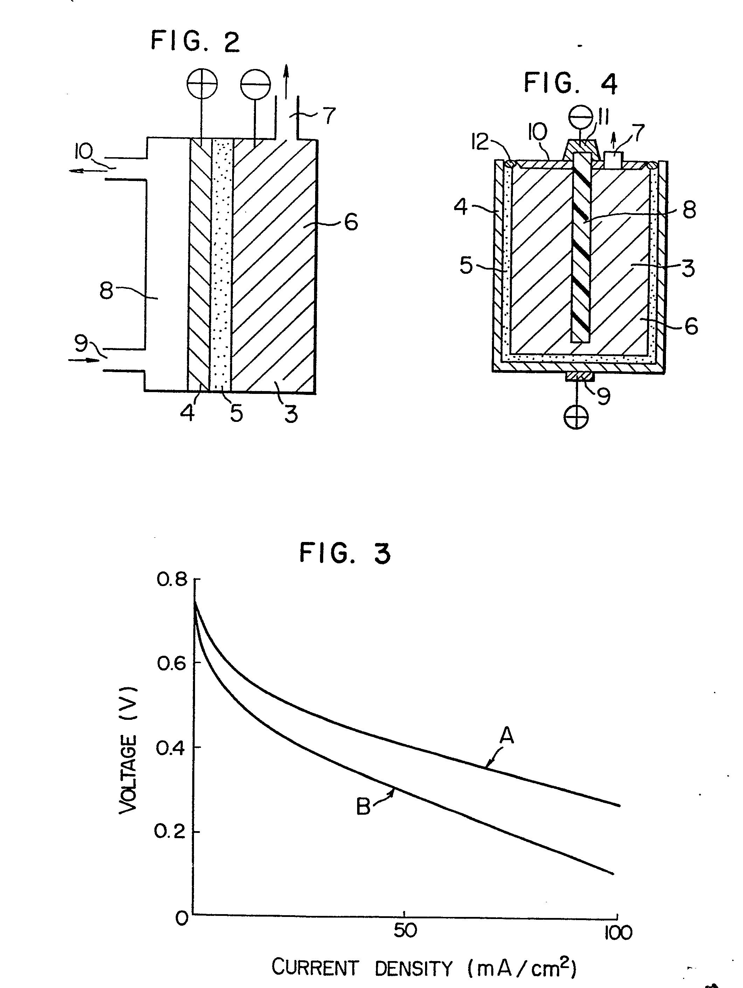

In the present invention, an appropiate porous material generally has an average pore size of 0.1 to 4 mm, preferably 0.2 to 2 mm, but the porous material having substantially equal pore sizes can be used. In the said range of average pore size, particularly the necessary available surface area can be obtained, and the discharge of reaction product gas can be carried out rapidly at the same time. The higher the porosity, the more effective the porous material, and generally the porosity is at least 80%, preferably 85 to 98%. The available surface area for reaction can be increased with increasing porosity. Furthermore, the thicker the porous material, the larger the available surface area for reaction and the higher the mechanical strength. Generally, the effective thickness is at least 1 mm. As shown in Fig. 4, a porous material having a thickness and a size enough to fill the entire anolyte chamber or the entire fuel chamber can be used.

In the present invention, an anode having a larger thickness is more effective for increasing the mechanical strength, and thus, when a porous material having a considerably large thickness is used, it is not necessary to support an electrode catalyst on the porous material to the entire thickness. That is, the catalyst can be supported up to the necessary thickness for the cell reaction, and no catalyst can be supported on the remaining portion of the porous material.

In the present invention, such a barrier that is provided between the anode and the cathode to prevent the fuel from migration to the cathode side as an ion exchange membrane, for example, a cation exchange membrane and an anion exchange membrane, non-woven fabric of asbestos or plastics, a plastic net, or the like, as usually used as a separator, can be employed. The barrier can contain an electrolyte and can be properly selected in view of an electrolyte species, etc. The most desirable function of the barrier for use in the present invention is to completely prevent the fuel from migration to the cathode side, but a barrier failing to completely satisfy such a condition, that is, a barrier allowing some fuel to migrate to the cathode, can be employed in the present invention.

The present invention is applicable to a fuel cell using a liquid fuel such as methanol, hydrazine, formalin, or the like.

In the present invention, pure oxygen, air, or any gas, so far as it contains an oxidizing gas such as a chlorine gas, can be used as an oxidizing agent to the cathode.

A plurality of the present fuel cells can be stacked one upon another and electrically connected to one another in series and/or in parallel to obtain the necessary voltage or power.

The present invention will be described in detail, referring to Example.

Example

A liquid fuel cell having the structure as shown in Fig. 2, wherein an anode (fuel electrode) 3 is filled in an entire fuel chamber (anolyte chamber) 6, and numeral 4 is a cathode (air electrode), numeral 5 is a cation exchange membrane as a barrier (so-called separator) containing an electrolyte, numeral 7 is a carbon dioxide gas outlet, numeral 8 is an air chamber, numeral 9 is an air inlet, and numeral 10 is an air-water vapor outlet. As the anode 3, a porous carbon material, as will be described below, is used, and its size is to fill the entire fuel or anolyte chamber 6. Sulfuric acid is used as the electrolyte.

The anode 3 is a porous carbon material of a three-dimensional, reticular structure as shown in Fig. 1(A), which has a porosity of 95%, a pore size distribution ranging from 0.1 to 4 mm, and a thickness of 2 mm, and has a platinum black catalyst prepared by dipping of the porous carbon material in an aqueous solution containing 4 g/ℓ of chloroplatinic acid and 0.08 g/ℓ of lead acetate and by electrodeposition by pulse current passage therethrough.

The cation exchange membrane 5 is provided between the anode 3 and the cathode 4 to prevent a short circuit therebetween and a possibility of direct oxidation of fuel on the cathode 4.

An aqueous solution containing 3 moles/ℓ of sulfuric acid and 1 mole/ℓ of methanol is supplied as an anolyte to the fuel cell thus prepared and a current density-voltage characteristic (I-V characteristic) is determined at 25°C. The results are shown in Fig. 3 as curve A.

For comparison, a sintered tantalum plate having an average pore size of 30 μm and a porosity of 60% is dipped in an aqueous solution containing 2 g/ℓ of chloroplatinic acid, then dried and reduced in a hydrogen gas stream at 250°C to support a platinum catalyst thereon. A liquid fuel cell having the similar structure to that of the foregoing embodiment as shown in Fig. 2 is prepared with the thus prepared electrode. The I-V characteristic of the comparative fuel cell is also shown in Fig. 3 as curve B.

It is seen from Fig. 3 that the present fuel cell has a lower voltage drop than that of the conventional fuel cell, even if more current is taken out. Furthermore, a $CO_2$ gas formed at the power generation can be readily discharged from the gas outlet 7 in the present fuel cell and is not retained in the electrolyte. Still furthermore, no fluctuation is observed at the power generation in the present fuel cell.

In Fig. 4, a schematic cross-sectional view of a fuel cell according to another embodiment of the present invention is shown, where a negative pole, current collector rod 8 is provided at the center axis of a cylindrical air electrode 4 having one open end, so that one end of the negative pole, current collector rod can be projected from the opening end of the air electrode 4 and another end thereof can be provided out of contact with the air electrode 4. Between the negative pole current collector rod 8 and the air electrode 4 are provided successively from the rod 8 outwards a fuel electrode 3 filling an entire anolyte chamber 6, and a barrier 5 containing an electrolyte. In Fig. 4, numeral 9 is a positive pole terminal, numeral 10 is a negative electrode top cover, numeral 7 is a gas outlet with a vent valve, numeral 11 is a negative pole terminal, and numeral 12 is a gasket. The fuel electrode filling the anolyte chamber 6 is a porous nickel material having the three-dimensional, reticular structure as shown in Fig. 1(A), the so-called foamed metal, which supports a platinum catalyst. The thickness of the fuel electrode 3 from the rod 8 to the barrier 5 containing the electrolyte is about 15 mm. The porous material has a porosity of 98% and a pore size distribution ranging from 0.1 to 4.0 mm. The platinum catalyst is supported on the porous material by dipping the porous nickel material in a solution of platinum salt, and depositing fine platinum onto the surfaces of pores in the porous nickel material owing to a difference in ionization tendency between platinum and nickel.

The negative pole, current collector rod 8 is made from carbon, but can be made from nickel. The electrolyte is impregnated into asbestos (not shown in the drawing) to prevent a short circuit between the

0063804

electrodes. The asbestos (barrier) can be replaced with other fibers or porous material that cannot be attacked by the electrolyte.

An aqueous solution containing 30% potassium hydroxide and 1% hydrazine is supplied as anolyte to the fuel cell of the foregoing structure, and a circuit voltage of 1.1 V and an I-V characteristic of 0.75 V at 50 mA/cm$^2$ and 0.55 V at 80 mA/cm$^2$ are obtained.

The structure as shown in Fig. 4 has such effects that, since the space between current collector rod 8 and barrier 5 containing the electrolyte is stuffed by the fuel electrode 3 disclosed above, the mechanical strength of the cell can be increased, and no change occurs in distance between the anode and the cathode due to deformation, considerably reducing a fluctuation in power-generating characteristic.

The present invention is not limited to the foregoing embodiments. For example, it is not necessary to fill the entire anolyte chamber 6 with the fuel electrode.

As described above, the present liquid fuel cell has the following effects.

(1) The larger pore size ensures smooth supply of fuel and can support a smaller amount of catalyst thinly and uniformly, resulting in a considerable increase in the power-generating characteristic. Discharge of a carbon dioxide gas, etc. as reaction products can be made rapidly, which can also contribute to an increase

0063804

in the power-generating characteristic.

(2)    The mechanical strength of electrode itself is higher with a result of less change in the distance between the electrodes, and much less fluctuation in the power-generating characteristic.

(3)    Owing to the three-dimensional, reticular structure, the anode itself has a lower resistance than that of sintered electrode, with a result of less resistance loss.

(4)    The shape of anode can be selected as desired, and the shape of an entire cell can be varied.

WHAT IS CLAIMED IS:

1. A liquid fuel cell comprising an anode of electroconductive porous material supporting an electrode catalyst to which a liquid fuel is supplied, a cathode of electroconductive porous material supporting an electrode catalyst to which an oxidizing agent is supplied, an electrolyte existing between the said two electrodes, and a barrier containing the electrolyte and preventing the liquid fuel from transfer to the cathode side, characterized in that the anode has a three-dimensional, reticular structure allowing a gas generated by cell reaction within the anode to ascend and get released from the anode, and having à pore size for retaining a mixture of the liquid fuel and the electrolyte within the anode and a thickness for supporting a necessary amount of the electrode catalyst for the cell reaction.

2. The liquid fuel cell according to Claim 1, wherein the electroconductive porous material has a three-dimensional, reticular structure made from carbon or nickel.

3. The liquid fuel cell according to Claim 1 or 2 wherein the electroconductive porous material has an average pore size of 0.1 to 4 mm.

4. The liquid fuel cell according to Claim 1, 2, or 3, wherein the electroconductive porous material has a porosity of 85 to 98%.

5. The liquid fuel cell according to Claim 1 or 2, wherein the electroconductive porous material has an average pore size of 0.1 to 4 mm and a porosity of 85 to 98%.

6. The liquid fuel cell according to Claim 1, 2 or 5, wherein the barrier is an ion exchange membrane, asbestos, polymeric non-woven fabric or a plastic net, and contains an electrolyte therein.

7. The liquid fuel cell according to Claim 1, 5 or 6, wherein a fuel or anolyte-reserving chamber is provided at the fuel supply side of the anode.

8. A liquid fuel cell comprising an anode of electroconductive porous material supporting an electrode catalyst to which a liquid fuel is supplied, a cathode of electroconductive porous material supporting an electrode catalyst to which an oxidizing agent is supplied, an electrolyte existing between the said two electrodes, and a barrier containing the electrolyte and preventing the liquid fuel from transfer to the cathode side, characterized in that the anode is an electroconductive porous material having a structure of most or all of pores being connected to one another.

9. The liquid fuel cell according to Claim 8, wherein the electroconductive porous material is made for carbon or nickel.

10. The liquid fuel cell according to Claim 8 or 9, wherein the electroconductive porous material has an average pore size of 0.1 to 4 mm and a porosity of 85 to 98%.

11. The liquid fuel cell according to Claim 8, 9 or 10, wherein the barrier is an ion exchange membrane, asbestos, polymeric non-woven fabric, or a plastic net, and contains the electrolyte.

FIG. I(A)

FIG. I(B)

**FIG. 2**

**FIG. 4**

**FIG. 3**

CURRENT DENSITY (mA/cm²)